# EUROPÄISCHE PATENTSCHRIFT

(11) **EP 2 386 198 B1**
(45) Veröffentlichungstag und Bekanntmachung des Hinweises auf die Patenterteilung: **25.06.2014**
(21) Anmeldenummer: 11003800.7
(22) Anmeldetag: 10.05.2011
(51) Int. Cl.: A01C 17/00

(54) **Düngestreuer**
Fertilizer spreader
Appareil d'épandage d'engrais

(30) Priorität: 14.05.2010 DE 102010020551
(43) Veröffentlichungstag der Anmeldung: 16.11.2011
(73) Patentinhaber: RAUCH Landmaschinenfabrik GmbH, 76547 Sinzheim (DE)
(72) Erfinder: Stöcklin, Volker, 77975 Ringsheim (DE); Zeitvogel, Thomas, 77836 Rheinmünster (DE); Mandlier, Maximilian, 76547 Sinzheim (DE)
(74) Vertreter: Lasch, Hartmut

(56) Entgegenhaltungen:
- EP-A1- 2 057 876
- DE-A1- 3 739 265
- DE-A1- 19 745 441
- DE-A1- 19 748 156

## Beschreibung

Die Erfindung betrifft einen Düngerstreuer mit den Merkmalen des Oberbegriffs des Anspruchs 1.

Zweischeibenstreuer mit den Merkmalen des Oberbegriffs des Anspruchs 1 haben sich zur präzisen Verteilung von Mineraldünger auf Arbeitsbreiten zwischen 12 und 42m durchgesetzt.

Die Anforderungen an diese Streuer haben sich in den letzten Jahren wesentlich erhöht. So werden heute nicht mehr nur die Düngerdosierung und -Verteilung in der Mitte des Feldes - also die Verteilung zwischen den Fahrgassen - sondern auch die - oft komplexen - Randzonen des Feldes betrachtet. Hierzu hat es sich als vorteilhaft erwiesen, wenn die Drehzahl der beiden Verteilerscheiben unabhängig voneinander einstellbar ist.

Die Erfindung befasst sich insbesondere mit der Antriebsseite solcher Zweischeibenstreuer, und zwar mit solchen Streuern, die einen hydraulischen Antrieb für die Verteilerscheiben aufweisen. Ein solcher Zweischeibenstreuer ist aus der Praxis bekannt (Prospekt der Anmelderin "AXERA", Druckvermerk: AXERA-10.2009/GR). Die Verteilerscheiben werden von unter ihrer Antriebsnabe mit senkrechter Antriebswelle angeordneten Hydraulikmotoren angetrieben, die in einer quer zur Fahrrichtung verlaufenden Tragkonsole aus einem nach unten offenen C-Profil von unten eingesetzt sind. Die Rührwerke in den beiden Trichtern des Düngerbehälters werden von einem unter dem Dach über eine Konsole am Dach befestigten Hydraulikmotor mit Stirnradgetriebe und querliegender Welle, die die Behälterwände durchsetzt, angetrieben.

Der Hydraulikblock für die Versorgung und Regelung der Hydraulikmotoren befindet sich an der dem Traktor zugekehrten Frontseite des Düngerstreuers. Er ist seitlich versetzt auf dem Behälterrahmen befestigt. Die Aufnahme der Drehzahl der Verteilerscheiben erfolgt durch an der Unterseite der Verteilerscheiben angeordnete Geber, von denen beispielsweise 6 Stück über den Umfang verteilt sind. Auf der Tragkonsole ist jeweils ein Sensor angeordnet, der beim Vorbeistreichen der Geber die Umlaufgeschwindigkeit registriert und an ein Bedienterminal weitergibt. Problematisch ist die Aufnahme der Drehzahl insbesondere nach einem Scheibenwechsel, weil die Paarung Geber/Sensor aufgehoben wird und es bei einem erneuten Einbau einer neuen oder anderen Verteilerscheibe oft nicht gelingt, den korrekten Abstand zwischen Geber und Sensor wiederherzustellen.

Der auf dem Behälterrahmen seitlich versetzte Hydraulikblock ist an dieser Stelle raumgreifend untergebracht und erfordert eine relativ aufwändige Führung der Hydraulikleitungen vom Traktor zum Hydraulikblock und von diesem zu den Hydraulikmotoren. Die Drucksensoren für die Hydraulikmotoren sind in dem C-Profil der Tragkonsole angeordnet und damit der Verschmutzung ausgesetzt. Der bekannte Streuer hat den Nachteil, dass die Hydraulik-Bauelemente über den gesamten Streuer verteilt angeordnet und deswegen nur umständlich zugänglich sind.

Bei einer anderen aus der Praxis bekannten Antriebsvariante (z.B. Prospekt AXIS EDR der Anmelderin, Druckvermerk AXIS-EDR-10.2007/GR) erfolgt der Antrieb der Verteilerscheiben über Elektromotore, die über Traktor-Umrichter elektrisch versorgt werden. Der elektrische Rührwerksantrieb wird über die 12 Volt-Leistungsschnittstelle des Traktors ermöglicht. Die Elektromotoren sind quer zur Fahrtrichtung in der Tragkonsole angeordnet und treiben über ein Winkelgetriebe die Verteilerscheiben an. Der Rührwerksantrieb ist mit senkrechter Achse an der Tragkonsole angeordnet und weist einen exzentrischen Abtrieb auf, mit dem er über Anschlusslaschen nach rechts und links verlaufende Hebelgetriebe in eine Hin- und Herbewegung versetzt, die ihrerseits mit ihren Enden die senkrecht stehende Rührwerkswelle in einer Drehschrittbewegung antreiben, wie in der EP 1 559 305 B1 für den Fall eines mechanischen Antriebs beschrieben. Von Vorteil ist hierbei, dass der komplette Antriebszug eine bauliche Einheit bildet. Da die Elektromotoren für den Scheibenantrieb eine Mittelspannung von 400 Volt benötigen, ist eine entsprechende traktorseitige Ausstattung, die nicht immer gegeben ist, erforderlich.

Schließlich sind rein mechanische Antriebe bekannt (EP 1 559 305 B1), bei denen wiederum eine im hinteren Bereich des Düngerstreuers querliegende Tragkonsole vorgesehen ist. Der Antrieb erfolgt von der Zapfwelle über eine Gelenkwelle, die über eine mittige Eingangswelle in die Tragkonsole und über ein Winkelgetriebe eine in der Tragkonsole quer verlaufende Welle antreibt, die ihrerseits über endständige Winkelgetriebe die Verteilerscheiben antreibt. Auch die Rührwerke werden mechanisch angetrieben. Hierzu dient ein vom Getriebe in der Tragkonsole abgeleiteter Exzentertrieb, der nach links und rechts verlaufende Hebelgetriebe in eine Hin- und Herbewegung versetzt, die wiederum über endständige Hebel die senkrechte Rührwerksachse in eine Drehschrittbewegung versetzen. In einer Variante ist auch ein hydraulischer Rührwerksantrieb beschrieben, wobei der Hydraulikmotor am Rahmen des Behälters befestigt ist.

Der Erfindung liegt die Aufgabe zugrunde, einen Zweischeibendüngerstreuer mit hydraulischem Antrieb für die Verteilerscheiben derart auszubilden, dass eine einfachere Montage, ein kompakterer Aufbau, eine leichte Überprüfungsmöglichkeit und ein wenig aufwändiger Service ermöglicht wird. Ferner soll eine Modulbauweise erreicht werden, die einen wahlweisen Austausch des hydraulischen Antriebs gegen einen mechanischen oder elektrischen ermöglicht.

Bei einem Düngerstreuer mit den Merkmalen des Oberbegriffs des Anspruchs 1 wird die Erfindungsaufgabe dadurch gelöst, dass der Hydraulikblock mit der Tragkonsole mechanisch verbunden ist.

Es wird eine komplette Baueinheit aus Tragkonsole und Hydraulikblock erhalten, wodurch Montage, Service und Prüfung vereinfacht und erleichtert werden. Die Hydraulikleitungen können direkt vom Traktor unter dem Behälterdach an den Hydraulikblock herangeführt werden, so dass sie entsprechend kurz ausgebildet sein können.

Vorzugsweise ist der Hydraulikblock etwa mittig in Fahrtrichtung angeordnet, woraus sich kürzeste Wege für die Hydraulikleitungen ergeben.

In weiterhin vorteilhafter Ausführung ist der Hydraulikblock zumindest teilweise unter dem Dach des Düngerbehälters angeordnet, wodurch sich eine platzsparende Unterbringung des Hydraulikblocks im vorderen Bereich des Zweischeibenstreuers ergibt.

Zweckmäßigerweise ist der Hydraulikblock auf einer in Fahrtrichtung mittigen Hydraulikkonsole montiert, die mit der Tragkonsole verbunden ist.

Dadurch wird eine einfache Stahlblechkonstruktion verwirklicht und der vorhandene Raum unter dem Behälterdach ausgenutzt.

Hierzu dient das weitere Merkmal, dass die Hydraulikkonsole schräg nach oben in Fahrtrichtung und in Richtung unter das Dach des Düngerbehälters an der Tragkonsole angeordnet ist.

Durch die schräge Anordnung der Hydraulikkonsole kann der Raum unterhalb des Behälterdaches optimal genutzt werden. Ferner sind die Hydraulikanschlüsse für die vom Traktor kommenden Zu- und Rückleitungen besonders einfach anzubringen.

In weiterhin bevorzugter Ausführung ist vorgesehen, dass die Hydraulikmotoren mit ihrer Achse horizontal und quer zur Fahrtrichtung in der Tragkonsole angeordnet sind.

Damit ist eine geringe Bauhöhe im Bereich der Tragkonsole verbunden. Die Hydraulikmotoren sind vollständig innerhalb des C-Profils der Tragkonsole untergebracht und es lassen sich bei geringer Bauhöhe auch große und damit lange Hydraulikmotoren problemlos unterbringen.

Zwischen dem Hydraulikmotor und der Antriebsnabe der Verteilerscheibe ist ein Winkelgetriebe angeordnet, das die Möglichkeit eröffnet, die Drehzahl des Hydraulikmotors mit 1:2 ins Langsame zu übersetzen. Der Hydraulikmotor kann also mit höherer Drehzahl und dadurch bei gutem mechanischem Wirkungsgrad laufen. Ferner lässt sich bei einer stabilen Lagerung der Achse der Verteilerscheibe ein Standardmotor verwenden.

In weiterhin bevorzugter Ausführungsform ist vorgesehen, dass die Drehzahl der Verteilerscheiben durch einen in das Gehäuse des Winkelgetriebes eingesetzten und justierten Sensor erfasst wird, der mit einem Inkrementgeber auf der Achse der Verteilerscheibe zusammenwirkt. Im Gegensatz zum gattungsgemäßen Stand der Technik sieht die erfindungsgemä-βe Ausführungsform eine feste und justierte Zuordnung von Drehzahlgeber und Sensor vor, die auch bei einem Wechsel oder Austausch der Verteilerscheiben nicht beeinflusst wird und stets exakte Ergebnisse liefert.

Der Inkrementgeber kann auf seinem Umfang bis zu 16 oder mehr Inkremente aufweisen und damit für eine hohe Auflösung sorgen, während beim einschlägigen Stand der Technik schon aus Platzgründen auf der Verteilerscheibe nur wenige Geber angeordnet sind.

Zweckmäßigerweise ist der Sensor mittels eines eigenen Gehäuses ein- und ausbaubar, um ihn ohne Ausbau des Antriebs leicht austauschen und exakt positioniert wieder einsetzen zu können.

Hierzu trägt ferner bei, dass die korrekte Einstellung des Sensors durch den bündigen Einbau in das Gehäuses des Winkelgetriebes gewährleistet ist.

Damit ist eine integrierte Drehzahlerfassung möglich, die unabhängig vom Aufbau der Verteilerscheiben ist.

Zweckmäßigerweise sind die Drucksensoren für den Eingangsdruck jedes Hydraulikmotors und für den gemeinsamen Rücklauf in dem Hydraulikblock integriert.

Damit sind die Drucksensoren keiner Beschädigungsgefahr, wie sie bei freiliegenden Bauelementen gegeben ist, ausgesetzt, und es sind auch keine zusätzlichen Verschraubungen im Bereich der Hydraulikmotoren erforderlich.

Wie bekannt, ist die Tragkonsole ein nach unten offenes C-Profil, das an seinen Enden durch Flansche abgeschlossen ist und in das die Hydraulikmotoren von unten eingesetzt sind. Hierbei ist erfindungsgemäß vorgesehen, dass zumindest im Bereich der Hydraulikmotoren und der Winkelgetriebe diese nach unten überdeckende lochblechartige Schutzbleche an der Tragkonsole angebracht sind, um beim Absetzen des Streuers Beschädigungen zu vermeiden. Ferner wird der Zutritt von Schmutz und Dünger zu den Hydraulikmotoren erschwert bzw. beim Anhalten des Streuers ein Zurückfallen nach unten ermöglicht.

In einer vorteilhaften Ausführung übernimmt die Erfindung den bei einem mechanischen Antrieb bekannten Antrieb für die Rührwerke, wie er in einigen Varianten in der EP 1 559 305 B1 beschrieben ist. Es ist also für die beiden Rührwerke ein einziger mittiger Antrieb vorgesehen, der über einen eine Hin- und Herbewegung auslösenden Exzenterabtrieb sich nach links und rechts erstreckende Hebelgetriebe in Bewegung setzt, deren endständige Hebel die vertikale Rührwerkswellen in eine Drehschrittbewegung versetzen. Dieser mechanische Hebelantrieb mit senkrecht stehender Rührwerkswelle hat sich in der Praxis außerordentlich bewährt. Er ist elastisch genug, um Toleranzen auszugleichen und führt gegenüber einer umlaufenden Rührwerksbewegung zu einer schonenden Dünger-Fluidisierung im Behälter.

Der Antrieb für die Rührwerke kann in einer ersten Ausführung ein Hydraulikmotor sein, wobei die Regelung in dem Hydraulikblock integriert ist.

Stattdessen kann der Antrieb für die Rührwerke auch ein Elektromotor sein, der direkt oder indirekt an der 12V-Leistungsschnittstelle des Traktors angeschlossen ist. Dadurch sinken die Anforderungen an die Hydraulikleistung des Traktors, es entfallen Hydraulikventile im Hydraulikblock und es ergibt sich insgesamt eine einfache Montage.

In beiden Fällen ist der Antrieb für die Rührwerke vertikal eingebaut und ferner zweckmäßigerweise über eine Montagekonsole an der Tragkonsole befestigt.

Im Falle eines elektrischen Antriebs ist in einem Schaltkasten eine Überlastabschaltung integriert, wobei der Schaltkasten gleichfalls auf der Hydraulikkonsole montiert ist. Die Überlastabschaltung verhindert bei Blockieren der Rührwerke das Durchbrennen des Motors.

Die Überlastabschaltung sendet beim Überschreiten einer Überlastgrenze, z.B. eines Überstroms ein Signal an die elektronische Steuerung.

Es kann weiterhin vorgesehen sein, dass die elektrischen und hydraulischen Leitungen, die zum Traktor und/oder direkt oder indirekt zu Bedienelementen/Verteilerkasten/Bedienterminal führen, eine Kupplungsmöglichkeit aufweisen, um die Antriebs-Baueinheit leicht anschließen zu können.

Die Erfindung gibt die Möglichkeit, dass die Schnittstellen zwischen Behälterrahmen und Tragkonsole für bekannte mechanische und elektrische Antriebe der Verteilerscheiben und für hydraulische Antriebe gemäß der Erfindung jeweils dieselben sind.

Ferner kann vorgesehen sein, dass die Schnittstelle für den Antrieb des Rührwerks rechts/links dieselben für den mechanischen, elektrischen und hydraulischen Antrieb sind.

Schließlich sind die Verteilerscheiben dieselben für den hydraulischen Antrieb, den mechanischen Antrieb oder den elektrischen Antrieb, so dass sie unabhängig von der Antriebsart einsetzbar sind, insbesondere keine eigenen Vorkehrungen wie die Geber an der Unterseite der Verteilerscheiben bei dem bekannten hydraulischen Antrieb aufweisen müssen. Hieraus ergeben sich große Fertigungs- und Logistikvorteile.

Die erfindungsgemäße Antriebsbaueinheit weist den Vorteil auf, dass sie vor dem Einbau in den Streuer geprüft und messtechnisch dokumentiert werden kann, wie sie auch im Servicefall komplett getauscht werden kann. Die Behältereinheit kann komplett geschweißt für die Montage der Antriebseinheit vorbereitet werden. Welcher Antrieb (hydraulisch, mechanisch, elektrisch) eingebaut wird, kann erst in der Montage entschieden werden.

Weitere Einzelheiten und Vorteile der Erfindung ergeben sich aus der nachfolgenden Beschreibung einer in der Zeichnung wiedergegebenen Ausführungsform. In der Zeichnung zeigen:
- Fig. 1.: eine perspektivische schematische Rückansicht eines Zweischeiben-Düngerstreuers ohne die Antriebe;
- Fig. 2.: eine perspektivische Ansicht von schräg oben auf die Tragkonsole und die Hydraulikkonsole;
- Fig. 3.: eine perspektivische Draufsicht auf die Tragkonsole und den Hydraulikblock;
- Fig. 4.: eine Ansicht von hinten auf die Bauteile des Antriebs für die Verteilerscheiben;
- Fig. 5.: eine Draufsicht auf die Darstellung gemäß Fig. 4 mit den Hydraulikleitungen;
- Fig. 6.: einen Teilschnitt durch das C-Profil der Tragkonsole mit abgebrochen wiedergegebenen Hydraulikmo- tor und Winkelgetriebe und
- Fig. 7.: einen vergrößerten Teilausschnitt Z aus Fig. 6 mit dem Inkrementgeber und dem Sensor.

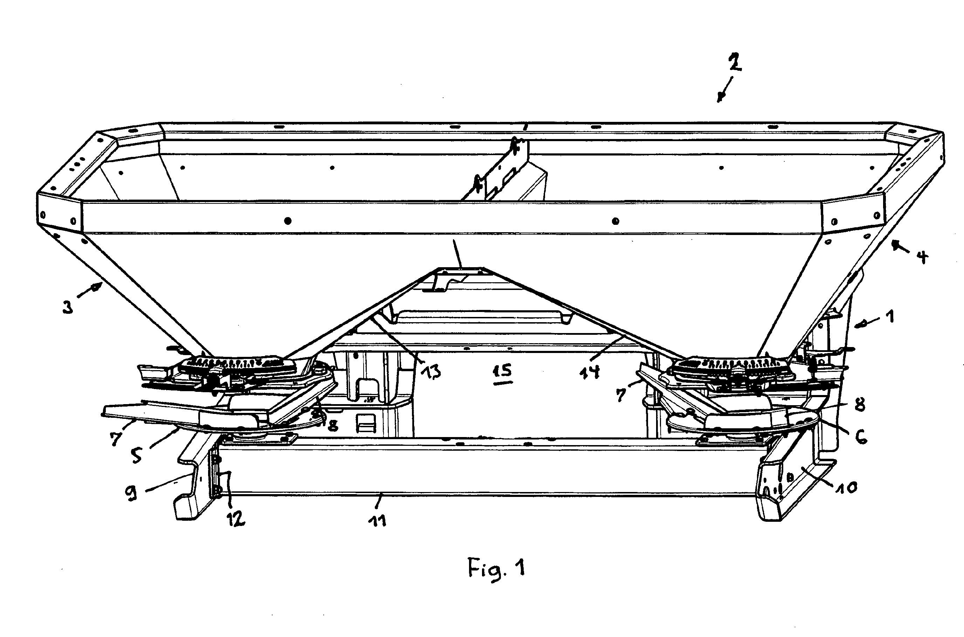

Der Düngerstreuer gemäß Fig. 1 ist als Anbaustreuer ausgebildet, der vom Dreipunktgestänge eines Traktors aufgenommen wird. Er weist einen Rahmen 1 auf, der den Düngerbehälter 2 aufnimmt. Der Düngerbehälter weist zwei sich nach unten verjüngende Trichter 3, 4 auf, die in ihrem Boden nicht gezeigte Dosierorgane besitzen, über die der Dünger den darunter umlaufenden Verteilerscheiben 5, 6 dosiert zugeteilt wird. Die Verteilerscheiben 5, 6 sind mit zwei oder mehr Wurfschaufeln 7, 8 besetzt, die den Dünger bei Umlauf der Scheiben zentrifugal abwerfen. Um die Wurfweite - gegebenenfalls auch nur einseitig - zu verstellen, ist an jedem Trichter 3, 4 eine Verstelleinrichtung für den Aufgabepunkt des Düngers vorgesehen, die an den Skalen erkennbar, aber nicht Gegenstand vorliegender Erfindung ist. Zu Einzelheiten wird auf die DE 10 2007 053 550 A1 (EP 02057876 A1) verwiesen.

Der Rahmen 1 wiest nach hinten reichende und nach außen gekehrte U-Profile 9, 10 auf, zwischen die im hinteren Bereich eine Tragkonsole 11 eingesetzt ist. Die Tragkonsole 11 ist aus einem nach unten offenen C-Profil gebildet, das an beiden Enden durch Flansche 12 geschlossen ist. Dadurch werden Schnittstellen gebildet, die den Einbau von Tragkonsolen für beliebige Antriebsarten für die Verteilerscheiben 5, 6 ermöglichen. So können in der Tragkonsole 11 unterhalb der Verteilerscheiben 5, 6 Hydraulikmotoren, die über einen Hydraulikblock von der Traktorhydraulik versorgt werden, oder aber Elektromotoren angeordnet sein.

Die einander zugekehrten Innenwände 13, 14 der Trichter 3, 4 bilden zwischen sich ein Dach 15. In jeden Trichter 3, 4 läuft oberhalb des Bodens ein nicht gezeigtes Rührwerk mit senkrechter Achse um. Die Rührwerke werden in einer Drehschrittbewegung angetrieben. Hierzu ist ein mittig unter dem Dach 15 angeordneter Exzenterabtrieb vorgesehen, der auf sich nach links und rechts erstreckende mehrgliedrige Hebelgetriebe wirkt. Wegen Einzelheiten wird auf die EP 1559305 B1 der Anmelderin verwiesen.

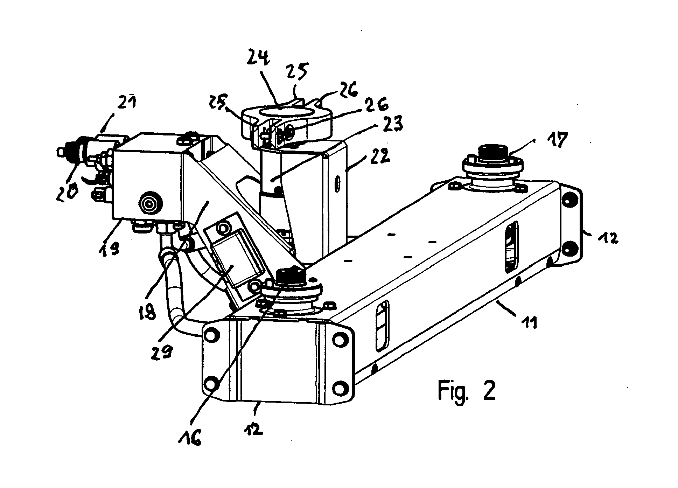

Fig. 2 zeigt die Tragkonsole 11 mit den Flanschen 12. Im Bereich der Enden der Tragkonsole 11 sind die Naben 16, 17 zum Aufsetzen der Verteilerscheiben 5, 6 erkennbar. An die Tragkonsole 11 ist mittig eine Hydraulikkonsole 18 angesetzt, die sich schräg nach oben unter das Dach 15 des Behälters 2 erstreckt und an seinem vorderen Ende den Hydraulikblock 19 aufnimmt. Er ist über Zu- und Rücklaufanschlüsse 20, 21 an die Hydraulik des Traktors anschließbar. Von ihm werden die Hydraulikmotoren in der Tragkonsole 11 für den Antrieb der Verteilerscheiben 5, 6 versorgt und geregelt. Die Anschlüsse 20, 21 liegen mittig im vorderen Bereich des Streuers und sind somit leicht zugänglich und über kurze Schlauchleitungen mit der Traktorhydraulik verbindbar.

An der Vorderseite der Tragkonsole 11 ist wiederum mittig eine Montagekonsole 22 angebracht, die den Antrieb 23 - elektrisch oder hydraulisch - mit einem Exzenterabtrieb 24 für die Rührwerke aufnimmt. An die parallelen Laschen 25, 26 wird jeweils das innere Ende der Zug- bzw. Schubstange des Hebelgetriebes angeschlossen. Für den Fall, dass der Antrieb 23 ein Elektromotor ist, ist ein Schaltkasten 29, der an der Hydraulikkonsole 18 befestigt ist, vorgesehen. Der Schaltkasten enthält unter anderem eine Überlastsicherung für den Elektromotor im Fall einer Blockade des einen oder anderen Rührwerks.

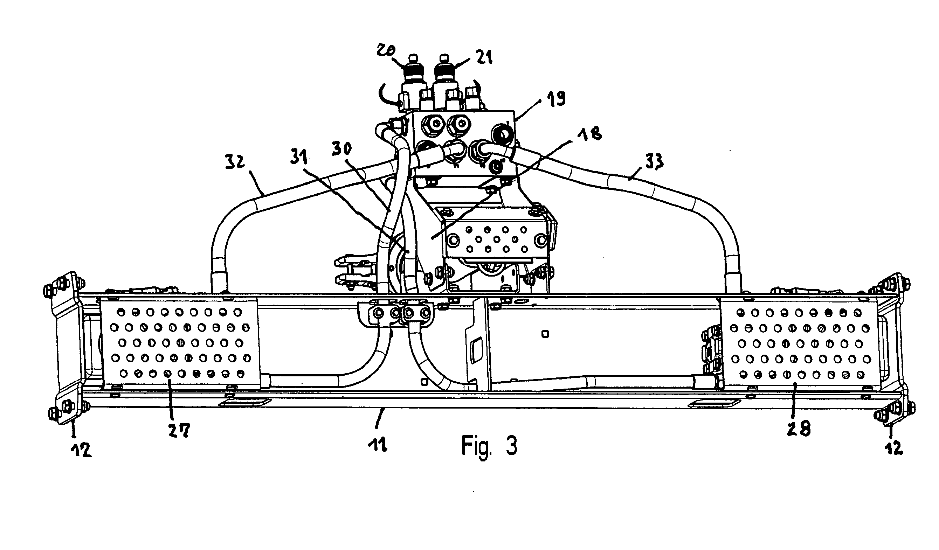

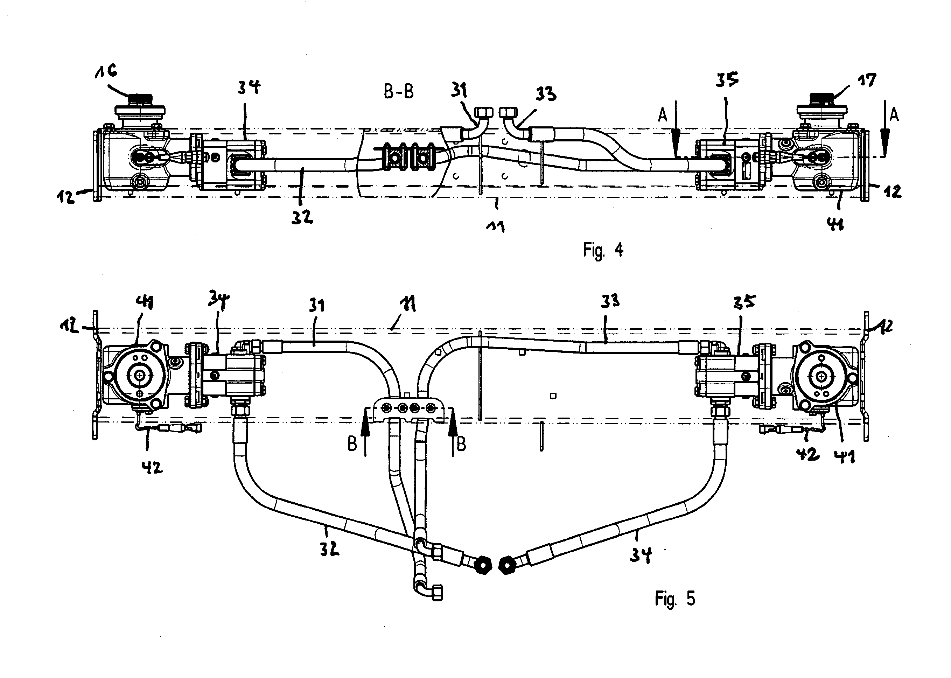

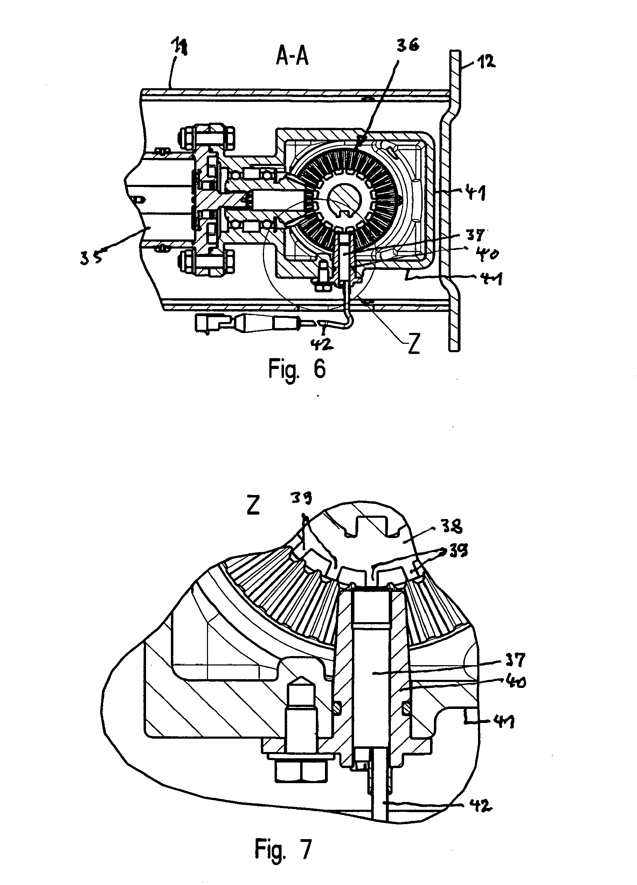

Fig. 3 zeigt die Tragkonsole 11 mit dem Hydraulikblock 19 von unten. Die Hydraulikmotoren für den Antrieb der Verteilerscheiben sind horizontal und quer zur Fahrtrichtung in der Tragkonsole 11 angeordnet, wie noch mit Bezug auf Fig. 4 und 5 näher erläutert wird. Sie sind nach unten durch Lochbleche 27, 28 geschützt. Die Hydraulik-Druckleitungen 30, 31 sind nahe der Hydraulikkonsole 18 in die Tragkonsole 11 hinein und in dieser geschützt geführt. Die horizontale Anordnung der Hydraulikmotoren 34, 35 ist aus Fig. 4 und 5 ersichtlich. Das Drehmoment wird über je ein Winkelgetriebe 36 (s. Fig. 6) auf die Nabe 16 bzw. 17 der Verteilerscheiben 5 bzw. 6 übertragen.

Im Bereich des Winkelgetriebes ist eine Drehzahlerfassung vorgesehen (s. Fig. 6 und 7). Hierzu dient ein Sensor 37, der mit einem Inkrementgeber 38 mit auf dem Umfang verteilten Inkrementen 39 zusammenwirkt. Der Sensor 37 sitzt in einem Gehäuse 40, das positioniert und justiert in das Gehäuse 41 des Winkelgetriebes 36 eingesetzt ist. Die vom Sensor 37 aufgenommen und die Drehzahl repräsentierenden elektrischen Impulse werden über die Leitung 42 an ein Bedienterminal im Traktor geleitet.

### Bezugszeichenliste

- 1: Rahmen
- 2: Düngerbehälter
- 3: Trichter
- 4: Trichter
- 5: Verteilerscheibe
- 6: Verteilerscheibe
- 7: Wurfschaufeln
- 8: Wurfschaufeln
- 9: U-Profil
- 10: U-Profil
- 11: Tragkonsole
- 12: Flansche
- 13: Innenwand von 3
- 14: Innenwand von 4
- 15: Dach
- 6: Nabe
- 17: Nabe
- 18: Hydraulikkonsole
- 19: Hydraulikblock
- 20: Hydraulikanschluss
- 21: Hydraulikanschluss

- 22: Montagekonsole
- 23: Rührwerkantrieb
- 24: Exzenterabtrieb
- 25: Lasche
- 26: Lasche
- 27: Lochblech
- 28: Lochblech
- 29: Schaltkasten
- 30: Druckleitung
- 31: Druckleitung
- 32: Rücklaufleitung
- 33: Rücklaufleitung
- 34: Hydraulikmotor
- 35: Hydraulikmotor
- 36: Winkelgetriebe
- 37: Sensor
- 38: Inkrementgeber
- 39: Inkremente
- 40: Sensorgehäuse
- 41: Getriebegehäuse
- 42: Leitung

## Patentansprüche

1. Düngerstreuer mit einem Düngerbehälter (2), der zwei sich nach unten verjüngende und zwischen sich ein Dach (15) bildende Trichter (3, 4) aufweist, zwei jeweils unterhalb der Trichter angeordnete Verteilerscheiben (5, 6), denen der Dünger über Dosierorgane im Boden der Trichter zugeführt wird, einem Hydraulikblock, von dem aus die die Verteilerscheiben antreibenden Hydraulikmotoren versorgt und geregelt werden, und je einem in jedem Trichter angeordneten Rührwerk, dem ein eigener Antrieb zugeordnet ist, wobei die Verteilerscheiben in einer quer zur Fahrrichtung verlaufenden Tragkonsole (11) gelagert und in dieser auch die Hydraulikmotoren (19) angeordnet sind, **dadurch gekennzeichnet, dass** der Hydraulikblock mit der Tragkonsole (11) mechanisch verbunden ist.

2. Düngerstreuer nach Anspruch 1, **dadurch gekennzeichnet, dass** der Hydraulikblock (19) etwa mittig in Fahrtrichtung angeordnet ist.

3. Düngerstreuer nach Anspruch 1 oder 2, **dadurch gekennzeichnet, dass** der Hydraulikblock (19) zumindest teilweise unter dem Dach (15) des Düngerbehälters (2) angeordnet ist.

4. Düngerstreuer nach einem der Ansprüche 1 bis 3, **dadurch gekennzeichnet, dass** der Hydraulikblock (19) auf einer in Fahrtrichtung mittigen Hydraulikkonsole (18) montiert ist.

5. Düngerstreuer nach Anspruch 4, **dadurch gekennzeichnet, dass** die Hydraulikkonsole (18) mit der Tragkonsole (11) verbunden ist.

6. Düngerstreuer nach einem der Ansprüche 4 oder 5, **dadurch gekennzeichnet, dass** die Hydraulikkonsole (19) schräg nach oben in Fahrtrichtung und in Richtung unter das Dach (15) des Düngerbehälters (2) an der Tragkonsole (11) angeordnet ist.

7. Düngerstreuer nach einem der Ansprüche 1 bis 6, **dadurch gekennzeichnet, dass** die Hydraulikmotoren (34, 35) mit ihrer Achse horizontal und quer zur Fahrtrichtung in der Tragkonsole (11) angeordnet sind.

8. Düngerstreuer nach Anspruch 7, **dadurch gekennzeichnet, dass** zwischen dem Hydraulikmotor (34, 35) und der Antriebsnabe (16, 17) der Verteilerscheibe (5, 6) ein Winkelgetriebe (36) angeordnet ist.

9. Düngerstreuer nach Anspruch 8, **dadurch gekennzeichnet, dass** die Drehzahl des Hydraulikmotors (34, 35) durch das Winkelgetriebe (36) 1:2 ins Langsame übersetzt wird.

10. Düngerstreuer nach einem der Ansprüche 8 oder 9, **dadurch gekennzeichnet, dass** die Drehzahl der Verteilerscheiben (5, 6) durch einen in das Gehäuse (41) des Winkelgetriebes (36) eingesetzten und justierten Sensor (37) erfasst wird, der mit einem Inkrementgeber (39) auf der Achse der Verteilerscheibe (5, 6) zusammenwirkt.

11. Düngerstreuer nach Anspruch 10, **dadurch gekennzeichnet, dass** der Inkrementgeber (38) auf seinem Umfang bis zu 16 oder mehr Inkremente (39) aufweist.

12. Düngerstreuer nach Anspruch 10 oder 11, **dadurch gekennzeichnet, dass** der Sensor (37) mittels eines eigenen Gehäuses (40) ein- und ausbaubar ist.

13. Düngerstreuer nach einem der Ansprüche 10 bis 12, **dadurch gekennzeichnet, dass** die korrekte Einstellung des Sensors (37) durch den bündigen Einbau in das Gehäuse (41) des Winkelgetriebes (36) gewährleistet ist.

14. Düngerstreuer nach einem der Ansprüche 1 bis 13, **dadurch gekennzeichnet, dass** die Drucksensoren für den Eingangsdruck jedes Hydraulikmotors (34, 35) und für den gemeinsamen Rücklauf in dem Hydraulikblock (19) integriert sind.

15. Düngerstreuer nach einem der Ansprüche 1 bis 14, wobei die Tragkonsole (11) ein nach unten offenes C-Profil ist, das an seinen Enden durch Flansche (12) abgeschlossen ist und in das die Hydraulikmotoren (34, 35) von unten eingesetzt sind, **dadurch gekennzeichnet, dass** zumindest im Bereich der Hydraulikmotoren (34, 35) und der Winkelgetriebe (36) diese nach unten überdeckende lochblechartige Schutzbleche (27, 28) an der Tragkonsole (11) angebracht sind.

16. Düngerstreuer nach einem der Ansprüche 1 bis 15, **dadurch gekennzeichnet, dass** für die beiden Rührwerke ein einziger mittiger Antrieb (23) vorgesehen ist, der über einen eine Hin- und Herbewegung auslösenden Exzenterabtrieb (24) sich nach links und rechts erstreckende Hebelgetriebe in Bewegung setzt, deren endständige Hebel die vertikalen Rührwerkswellen in eine Drehschrittbewegung versetzen.

17. Düngerstreuer nach Anspruch 16, **dadurch gekennzeichnet, dass** der Antrieb (23) für die Rührwerke ein Hydraulikmotor ist.

18. Düngerstreuer nach Anspruch 17, **dadurch gekennzeichnet, dass** die Regelung des Hydraulikmotors für die Rührwerke in dem Hydraulikblock (19) integriert ist.

19. Düngerstreuer nach Anspruch 16, **dadurch gekennzeichnet, dass** der Antrieb (23) für die Rührwerke ein Elektromotor ist.

20. Düngerstreuer nach Anspruch 19, **dadurch gekennzeichnet, dass** der Elektromotor direkt oder indirekt an der 12V-Leistungsschnittstelle des Traktors angeschlossen ist.

21. Düngerstreuer nach einem der Ansprüche 16 und 19, **dadurch gekennzeichnet, dass** der Antrieb (23) für die Rührwerke vertikal eingebaut ist.

22. Düngerstreuer nach einem der Ansprüche 16 bis 21, **dadurch gekennzeichnet, dass** der Antrieb (23) für die Rührwerke über eine Montagekonsole (22) an der Tragkonsole (11) befestigt ist.

23. Düngerstreuer nach einem der Ansprüche 19 oder 20, **dadurch gekennzeichnet, dass** in einem Schaltkasten (29) eine Überlastabschaltung für den Elektromotor (23) integriert ist.

24. Düngerstreuer nach Anspruch 23, **dadurch gekennzeichnet, dass** die Überlastabschaltung beim Überschreiten einer Überlastgrenze, z.B. eines Überstroms ein Signal an die elektronische Steuerung sendet.

25. Düngerstreuer nach einem der Ansprüche 23 oder 24, **dadurch gekennzeichnet, dass** der Schaltkasten (29) ebenfalls auf der Hydraulikkonsole (18) montiert ist.

26. Düngerstreuer nach einem der Ansprüche 1 bis 25, **dadurch gekennzeichnet, dass** die elektrischen und hydraulischen Leitungen, die zum Traktor und/oder direkt oder indirekt zu Bedienelementen/Verteilerkasten/Bedienterminal führen eine Kupplungsmöglichkeit aufweisen.

27. Düngerstreuer nach einem der Ansprüche 1 bis 26, **dadurch gekennzeichnet, dass** die Schnittstellen zwischen Behälterrahmen (1, 9, 10) und Tragkonsole (11) für bekannte mechanische und elektrische Antriebe der Verteilerscheiben (5, 6) und für die hydraulischen Antriebe nach einem der vorgenannten Ansprüche dieselben sind.

28. Düngerstreuer nach einem der Ansprüche 1 bis 27, **dadurch gekennzeichnet, dass** die Schnittstelle für den Antrieb des Rührwerks rechts/links dieselben für den mechanischen, elektrischen und hydraulischen Antrieb sind.

29. Düngerstreuer nach einem der Ansprüche 1 bis 28, **dadurch gekennzeichnet, dass** die Verteilerscheiben (5, 6) dieselben für den hydraulischen Antrieb, für den mechanischen oder elektrischen Antrieb sind.

## Claims

1. Fertilizer spreader with a fertilizer container (2) which has two funnels (3, 4) which taper downwards and form a roof (15) therebetween, two distributor discs (5, 6) which are both arranged below the funnels and to which the fertilizer is fed via metering members in the base of the funnels, a hydraulic block from which the hydraulic motors driving the distributor discs are supplied and controlled, and an agitator which is arranged in each funnel and which is assigned a dedicated drive, wherein the distributor discs are mounted in a supporting console (11) running transversally with respect to the driving direction, and the hydraulic motors (19) are also arranged therein, **characterized in that** the hydraulic block is mechanically connected to the supporting console (11).

2. Fertilizer spreader according to Claim 1, **characterized in that** the hydraulic block (19) is arranged approximately centrally in the direction of travel.

3. Fertilizer spreader according to Claim 1 or 2, **characterized in that** the hydraulic block (19) is at least partially arranged under the roof (15) of the fertilizer container (2).

4. Fertilizer spreader according to one of Claims 1 to 3, **characterized in that** the hydraulic block (19) is mounted on a central hydraulic console (18) in the direction of travel.

5. Fertilizer spreader according to Claim 4, **characterized in that** the hydraulic console (18) is connected to the supporting console (11).

6. Fertilizer spreader according to either of Claims 4 and 5, **characterized in that** the hydraulic console (19) is arranged obliquely upwards in the direction of travel and, in the direction under the roof (15) of the fertilizer container (2), is arranged on the supporting console (11).

7. Fertilizer spreader according to one of Claims 1 to 6, **characterized in that** the hydraulic motors (34, 35) are arranged with the axis thereof horizontally and transversally with respect to the direction of travel in the supporting console (11).

8. Fertilizer spreader according to Claim 7, **characterized in that** an angular gearing (36) is arranged between the hydraulic motor (34, 35) and the driving hub (16, 17) of the distributor disc (5, 6).

9. Fertilizer spreader according to Claim 8, **characterized in that** the rotational speed of the hydraulic motor (34, 35) is geared down 1:2 by the angular gearing (36).

10. Fertilizer spreader according to either of Claims 8 and 9, **characterized in that** the rotational speed of the distributor discs (5, 6) is detected by a sensor (37) which is inserted into the housing (41) of the angular gearing (36) and is adjusted and interacts with an increment transmitter (36) on the axis of the distributor disc (5, 6).

11. Fertilizer spreader according to Claim 10, **characterized in that** the increment transmitter (38) has up to 16 or more increments (39) on the circumference thereof.

12. Fertilizer spreader according to Claim 10 or 11, **characterized in that** the sensor (37) can be installed and removed by means of a dedicated housing (40).

13. Fertilizer spreader according to one of Claims 10 to 12, **characterized in that** the correct setting of the sensor (37) is ensured by the flush installation in the housing (41) of the angular gearing (36).

14. Fertilizer spreader according to one of Claims 1 to 13, **characterized in that** the pressure sensors for the input pressure of each hydraulic motor (34, 35) and for the common return are integrated in the hydraulic block (19).

15. Fertilizer spreader according to one of Claims 1 to 14, wherein the supporting console (11) is a downwardly open C profile which is closed at the ends thereof by means of flanges (12) and into which the hydraulic motors (34, 35) are inserted from below, **characterized in that**, at least in the region of the hydraulic motors (34, 35) and the angular gearings (36), protective plates (27, 28) which downwardly cover said hydraulic motors and angular gearings and are in the manner of perforated plates are attached to the supporting console (11).

16. Fertilizer spreader according to one of Claims 1 to 15, **characterized in that** a single central drive (23) is provided for the two agitators, said drive using an eccentric output (24), which triggers a reciprocating movement, to set lever mechanisms extending to the left and right into motion, the end levers of which set the vertical agitator shafts into a rotary stepping movement.

17. Fertilizer spreader according to Claim 16, **characterized in that** the drive (23) for the agitators is a hydraulic motor.

18. Fertilizer spreader according to Claim 17, **characterized in that** the control system of the hydraulic motor for the agitators is integrated in the hydraulic block (19).

19. Fertilizer spreader according to Claim 16, **characterized in that** the drive (23) for the agitators is an electric motor.

20. Fertilizer spreader according to Claim 19, **characterized in that** the electric motor is connected directly or indirectly to the 12V power interface of the tractor.

21. Fertilizer spreader according to either of Claims 16 and 19, **characterized in that** the drive (23) for the agitators is installed vertically.

22. Fertilizer spreader according to one of Claims 16 to 21, **characterized in that** the drive (23) for the agitators is fastened to the supporting console (11) via a mounting console (22).

23. Fertilizer spreader according to either of Claims 19 and 20, **characterized in that** an overload cut-off for the electric motor (23) is integrated in a switch box (29).

24. Fertilizer spreader according to Claim 23, **characterized in that** the overload cut-off sends a signal to the electronic controller in the event of the exceeding of an overload limit, for example an overload current.

25. Fertilizer spreader according to either of Claims 23 and 24, **characterized in that** the switch box (29) is likewise mounted on the hydraulic console (18).

26. Fertilizer spreader according to one of Claims 1 to 25, **characterized in that** the electric and hydraulic lines which lead to the tractor and/or directly or indirectly to operating elements/distributor box/operating terminal have a coupling option.

27. Fertilizer spreader according to one of Claims 1 to 26, **characterized in that** the interfaces between container frames (1, 9, 10) and supporting console (11) for known mechanical and electric drives of the distributor discs (5, 6) and for the hydraulic drives according to one of the preceding claims are the same.

28. Fertilizer spreader according to one of Claims 1 to 27, **characterized in that** the interfaces for the right/left drive of the agitator are the same for the mechanical, electric and hydraulic drive.

29. Fertilizer spreader according to one of Claims 1 to 28, **characterized in that** the distributor discs (5, 6) are the same for the hydraulic drive, for the mechanical drive or electric drive.

## Revendications

1. Appareil d'épandage d'engrais doté d'un réservoir d'engrais (2) comportant deux trémies (3, 4) se rétrécissant vers le bas et formant entre elles un toit (15), de deux disques d'épandage (5, 6) respectivement disposés en dessous de la trémie et auxquels l'engrais est amené via les organes de dosage placés dans le plancher de la trémie, d'un bloc hydraulique à partir duquel les moteurs hydrauliques entraînant les disques d'épandage sont alimentés et réglés et de respectivement un agitateur disposé dans chaque trémie auquel est associé un entraînement propre, les disques d' épandage étant disposés dans une console de support (11) s'étendant transversalement à la direction de conduite et les moteurs hydrauliques (19) étant également disposés dans celle-ci, **caractérisé en ce que** le bloc hydraulique est relié de façon mécanique à la console de support (11).

2. Appareil d'épandage d'engrais selon la revendication 1, **caractérisé en ce que** le bloc hydraulique (19) est disposé de façon quelque peu centrale dans la direction de conduite.

3. Appareil d'épandage d'engrais selon la revendication 1 ou 2, **caractérisé en ce que** le bloc hydraulique (19) est disposé au moins en partie en dessous du toit (15) du réservoir d'engrais (2).

4. Appareil d'épandage d'engrais selon l'une quelconque des revendications 1 à 3, **caractérisé en ce que** le bloc hydraulique (19) est monté sur une console hydraulique (18) centrale dans la direction de conduite.

5. Appareil d'épandage d'engrais selon la revendication 4, **caractérisé en ce que** la console hydraulique (18) est reliée à la console de support (11).

6. Appareil d'épandage d'engrais selon l'une quelconque des revendications 4 ou 5, **caractérisé en ce que** la console hydraulique (19) est disposée (11) de façon oblique vers le haut dans la direction de conduite et contre la console de support dans la direction passant sous le toit (15) du réservoir d'engrais (2).

7. Appareil d'épandage d'engrais selon l'une quelconque des revendications 1 à 6, **caractérisé en ce que** les moteurs hydrauliques (34, 35) sont disposés dans la console de support (11), avec leur axe disposé horizontalement et transversalement par rapport à la direction de conduite.

8. Appareil d'épandage d'engrais selon la revendication 7, **caractérisé en ce qu'**une transmission en angle (36) est disposée entre le moteur hydraulique (34, 35) et le moyen d'entraînement (16, 17) du disque d' épandage (5, 6).

9. Appareil d'épandage d'engrais selon la revendication 8, **caractérisé en ce que** la vitesse de rotation du moteur hydraulique (34, 35) est démultipliée par la transmission en angle (36) de 1:2 vers le lent.

10. Appareil d'épandage d'engrais selon l'une quelconque des revendications 8 ou 9, **caractérisé en ce que** la vitesse de rotation des disques d' épandage (5, 6) est déterminée par un capteur (37) inséré et ajusté dans le carter (41) de la transmission en angle (36), ledit capteur entrant en interaction avec un émetteur incrémentiel (39) placé sur l'axe du disque d' épandage (5, 6).

11. Appareil d'épandage d'engrais selon la revendication 10, **caractérisé en ce que** l'émetteur incrémentiel (38) comporte sur sa périphérie jusqu'à 16 incréments (39) ou plus.

12. Appareil d'épandage d'engrais selon la revendication 10 ou 11, **caractérisé en ce que** le capteur (37) peut être monté et démonté à l'aide d'un carter (40) propre.

13. Appareil d'épandage d'engrais selon l'une quelconque des revendications 10 à 12, **caractérisé en ce que** le réglage correct du capteur (37) est garanti par la structure en affleurement prévue dans le carter (41) de la transmission en angle (36).

14. Appareil d'épandage d'engrais selon l'une quelconque des revendications 1 à 13, **caractérisé en ce que** les capteurs de pression sont intégrés pour la pression d'entrée de chaque moteur hydraulique (34', 35) et pour le retour commun prévu dans le bloc hydraulique (19).

15. Appareil d'épandage d'engrais selon l'une quelconque des revendications 1 à 14, la console de support (11) étant un profilé en C ouvert vers le bas rattaché au niveau de ses extrémités par des brides (12) et dans lequel les moteurs hydrauliques (34, 35) sont insérés par en bas, **caractérisé en ce que** des tôles de protection (27, 28) de type tôle trouée les recouvrant vers le bas sont placées contre la console de support (11), au moins dans la région des moteurs hydrauliques (34, 35) et de la transmission en angle (36).

16. Appareil d'épandage d'engrais selon l'une quelconque des revendications 1 à 15, **caractérisé en ce qu'**un seul entraînement (23) central est prévu pour les deux agitateurs, ledit entraînement mettant en mouvement une transmission à levier s'étendant vers la gauche et la droite via un entraînement en sortie excentré (24) déclenchant un mouvement de va-et-vient dont les leviers finaux déplacent les arbres d'agitateur verticaux selon un mouvement de cran de rotation.

17. Appareil d'épandage d'engrais selon la revendication 16, **caractérisé en ce que** l'entraînement en entrée (23) des agitateurs est un moteur hydraulique.

18. Appareil d'épandage d'engrais selon la revendication 17, **caractérisé en ce que** la régulation du moteur hydraulique des agitateurs est intégrée dans le bloc hydraulique (19).

19. Appareil d'épandage d'engrais selon la revendication 16, **caractérisé en ce que** l'entraînement en entrée (23) des agitateurs est un moteur électrique.

20. Appareil d'épandage d'engrais selon la revendication 19, **caractérisé en ce que** le moteur électrique est directement ou indirectement raccordé à l'interface de puissance 12V du tracteur.

21. Appareil d'épandage d'engrais selon l'une quelconque des revendications 16 et 19, **caractérisé en ce que** l'entraînement (23) des agitateurs est monté verticalement.

22. Appareil d'épandage d'engrais selon l'une quelconque des revendications 16 à 21, **caractérisé en ce que** l'entraînement (23) des agitateurs est fixé à la console de support (11) via une console de montage (22).

23. Appareil d'épandage d'engrais selon l'une quelconque des revendications 19 ou 20, **caractérisé en ce qu'**un court-circuit de surcharge du moteur électrique (23) est intégré dans un boîtier d'alimentation (29).

24. Appareil d'épandage d'engrais selon la revendication 23, **caractérisé en ce que** le court-circuit de surcharge envoie un signal à l'élément de commande électronique en présence d'un courant de surtension.

25. Appareil d'épandage d'engrais selon l'une quelconque des revendications 23 ou 24, **caractérisé en ce que** le boîtier d'alimentation (29) est également monté sur la console hydraulique (18).

26. Appareil d'épandage d'engrais selon l'une quelconque des revendications 1 à 25, **caractérisé en ce que** les conduites électriques et hydrauliques conduisent au tracteur et/ou directement ou indirectement aux éléments de commande/au terminal de commande/au caisson de répartiteur et présentent une possibilité de couplage.

27. Appareil d'épandage d'engrais selon l'une quelconque des revendications 1 à 26, **caractérisé en ce que** les interfaces prévues entre le cadre de réservoir (1, 9, 10) et la console de support (11) prévues pour des entraînements mécaniques et électriques connus des disques d' épandage (5, 6) et pour les entraînements hydrauliques selon l'une quelconque des revendications précédentes sont les mêmes.

28. Appareil d'épandage d'engrais selon l'une quelconque des revendications 1 à 27, **caractérisé en ce que** l'interface de l'entraînement de l'agitateur droit/gauche est la même pour l'entraînement mécanique, électrique et hydraulique.

29. Appareil d'épandage d'engrais selon l'une quelconque des revendications 1 à 28, **caractérisé en ce que** les disques d'épandage (5, 6) sont les mêmes pour l'entraînement hydraulique, l'entraînement mécanique ou électrique.
